(19)

Europäisches Patentamt
European Patent Office
Office européen des brevets

(11) **EP 2 581 869 A1**

(12) **EUROPEAN PATENT APPLICATION**

(43) Date of publication:
**17.04.2013 Bulletin 2013/16**

(51) Int Cl.:
***G06Q 30/02*** *(2012.01)*

(21) Application number: **12185142.2**

(22) Date of filing: **20.09.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.10.2011 IN MU22722011**

(71) Applicant: **Tata Consultancy Services Limited
Maharashtra (IN)**

(72) Inventors:
• **Mishra, Pratik Kumar
600113 Chennai, Tamil Nadu (IN)**
• **Pothineni, Dinesh
600113 Chennai, Tamil Nadu (IN)**

(74) Representative: **Regimbeau
20, rue de Chazelles
75847 Paris Cedex 17 (FR)**

(54) **Content quality and user engagement in social platforms**

(57) In one embodiment, a method includes indexing a plurality of user contributed contents, received from a plurality of users, to at least one topic associated with a web based social platform, wherein the indexing is based on indexing rules. A topic quality score for the at least one topic is computed based on assessment of a quality of each of the plurality of user contributed contents, wherein the assessment is based at least on topic quality assessment parameters. A credibility score for each of a plurality of users is generated based in part on the topic quality score, wherein the plurality of users include users who contributed the user contributed contents. Based on the credibility score, at least one credible user from the plurality of users is identified to enhance quality of the web based social platform, and user engagement in the web based social platform.

EP 2 581 869 A1

**Description**

TECHNICAL FIELD

The present subject matter, in general, relates to social platforms and, in particular, to systems and methods for enhancing content quality and user engagement in social platforms.

BACKGROUND

In recent times, the use of internet has led to increased interactions between people over social platforms. Several social platforms, such as social networking websites, blogs, web forums, and social bookmarking sites are now available over the World Wide Web (web) where users can create personal profiles by registering on a website of the social platform. The users are also referred to as members of the social platform. The users can find old friends, make new friends, share experiences, information, knowledge, opinion or reviews on various topics, and the like by contributing content in the social platforms.

In general, popularity and profitability of any social platform is dependent on various factors including the number of users associated with the social platform, and activities and involvement of the users in the social platform. Thus, for improving the popularity and profitability of the social platform, the social platforms focus on attracting new users to join the social platform by enhancing the websites of the social platform, providing more features to the websites taking into consideration current public requirements and expectations. For example, some of the social platforms can suggest certain friends to a user based on matching the personal information in the personal profile of the user with other users, suggest that the user write content on the personal profiles of their friends, suggest that the user participates in discussions, question/answers, voting or polls, and contribute more and more content in the social platforms. Usually, there is no restriction on the type of content posted by the user. Thus, the users are able to post content varying from valuable content to immaterial, offensive, and malicious content.

SUMMARY

This summary is provided to introduce concepts related to content quality and user engagement in social platforms. These concepts are further described below in the detailed description. This summary is not intended to identify essential features of the claimed subject matter nor is it intended for use in determining or limiting the scope of the claimed subject matter.

In one embodiment, a method includes indexing a plurality of user contributed contents, received from a plurality of users, to at least one topic associated with a web based social platform, wherein the indexing is based on indexing rules. The method further includes computing, by a quality management system, a topic quality score for the at least one topic based on assessment of a quality of each of the plurality of user contributed contents, wherein the assessment is based at least on topic quality assessment parameters. The method furthermore includes generating, by a quality management system, a credibility score for each of a plurality of users based in part on the topic quality score, wherein the plurality of users include users who contributed the user contributed contents. Based on the credibility score, at least one credible user from the plurality of users is identified to enhance at least one of quality of the web based social platform, and user engagement in the web based social platform.

BRIEF DESCRIPTION OF THE DRAWINGS

The detailed description is provided with reference to the accompanying figures. In the figures, the left-most digit(s) of a reference number identifies the figure in which the reference number first appears. The same numbers are used throughout the drawings to reference like features and components.

Fig. 1 illustrates a network environment implementing a quality management system, in accordance with an embodiment of the present subject matter.

Fig. 2 illustrates a method for enhancing the content quality and user engagement in social platforms, in accordance with an embodiment of the present subject matter.

DETAILED DESCRIPTION

The present subject matter described herein relates to systems and methods for enhancing content quality and user engagement in social platforms thereby increasing the popularity and profitability of the social platforms. The social platforms referred to herein may include social networking websites, blogs, web forums, social bookmarking sites and the like. Such social platforms are also referred to as web based social platforms. These social platforms enable users to find old friends, make new friends, share experiences, information, knowledge, opinion or reviews on various topics, and the like by contributing content in the social platforms. The content can be contributed in the form of text, image, video, votes, likes/dislikes, ratings, hyperlinks to other websites, and the like.

Generally, social platforms try to attract new users to join the social platforms by providing appealing websites, a number of features in the websites, periodically updating the websites, and modifying the features taking into consideration current market trends and public demand. Further, the social platforms suggest that the users participate in various activities in the social platforms and contribute more content in the social platforms. Such conventional techniques, however, do not focus on the quality of content contributed by the users. Since these social platforms allows users to freely publish their thoughts, ideas and opinions, the users are able to post content ranging from mildly offensive content to content malicious enough to render aspects of the social platform virtually unusable, such as spam. Such content posted by the users may eventually reduce the revenue of the social platform and popularity of the social platform.

In accordance with the present subject matter, quality of content and user engagement in the social platform is enhanced by enchaining the quality of content in various topics associated with the social platform.

In one implementation, a topic index is created for classifying the content contributed by various users in the social platform into a plurality of topics. The topics may be understood as various subjects of discussion or interactions. The topics include, but are not restricted to, sports, politics, science, and technology. Every time a new content is contributed by the user, the new content is subsequently indexed to an appropriate topic in the topic index. It will be understood that the topic index can be periodically updated when new topics are identified or existing topics require modification.

In one implementation, quality of the content associated with each topic in the topic index can be assessed based at least on a variety of topic quality assessment parameters. The topic quality assessment parameters may include, but are not restricted to, sentiments of content posted in the topic by various users, voting in various posts, likes or dislikes indicators for the content posted in the topic, reviews or feedback posted in the topic, and spam or junk content in the topic. Based on the topic quality assessment parameters, a topic quality score for each topic may be computed. The topic quality score for a topic indicates overall quality of the content posted in the topic.

In an implementation, if the topic quality score for one or more topics are found to be low, then such topics, either individually or collectively, can be further processed to enhance the quality of content in the topics. For example, credibility of the users with respect to the topics may be determined. Generally, some of the plurality of users may be good at contributing quality content in certain topics based on the expertise of the user. Whereas, other users may be good at contributing quality content in other topics, depending on their knowledge and expertise. Thus, credible users, i.e., the users who are good at contributing the quality content in the topics under consideration or processing can be identified and encouraged to contribute a greater volume of quality content in the topic, so as to improve the topic quality.

In one implementation, credibility scores for the users with respect to the topics under consideration can be computed to determine the credibility of the users. The credibility scores can be computed for an individual topic, a group of topics, or all the topics collectively. For the sake of clarity, when the credibility scores are computed for a single topic or a group of topics taken together, such credibility scores are referred to as topic selective credibility scores. If the credibility scores are computed for all the topics taken together, then such credibility scores are referred to as global credibility scores. The users with higher topic selective credibility scores are considered as credible users with respect to the selected topic(s), i.e. users who are capable of contributing good quality content related to those topic(s). While, the users with high global credibility scores are considered as credible users who are capable of posting good quality content in all the topics in the topic index, taken together.

In one implementation, the topic selective credibility scores are computed based on the quality of contribution made by the users in the selected topic(s). In another implementation, the topic selective credibility scores of the users are computed further based on the popularity of the users in the selected topic(s), and value or quality of their contribution in the topic(s). Thus, the topics, such as the topics with low topic quality scores, either individually or in group, may be taken into consideration and credibility of the users with respect to the individual topic or a group of topics can be determined to identify the credible users. The credible users may be thereafter targeted to enhance the quality of content in the topic(s) under consideration, thereby enhancing the quality of the content in the social platform.

In one implementation, the global credibility scores are computed based on the quality of contribution made by the users in all the topics in the topic index, taken together. In another implementation, the global credibility scores for the users are computed further based on the popularity of the users across the social platform and value of their contribution across the social platform. Based on the global credibility scores, credible users across the social platform are identified and may be targeted to enhance the user engagement in the social platform. For example, the credible users can be incentivized or rewarded in order to enhance the user engagement in the social platform.

While aspects of systems and methods for enhancing content quality and user engagement in social platforms can be implemented in any number of different computing systems, environments, and/or configurations, the embodiments are described in the context of the following exemplary system architecture(s).

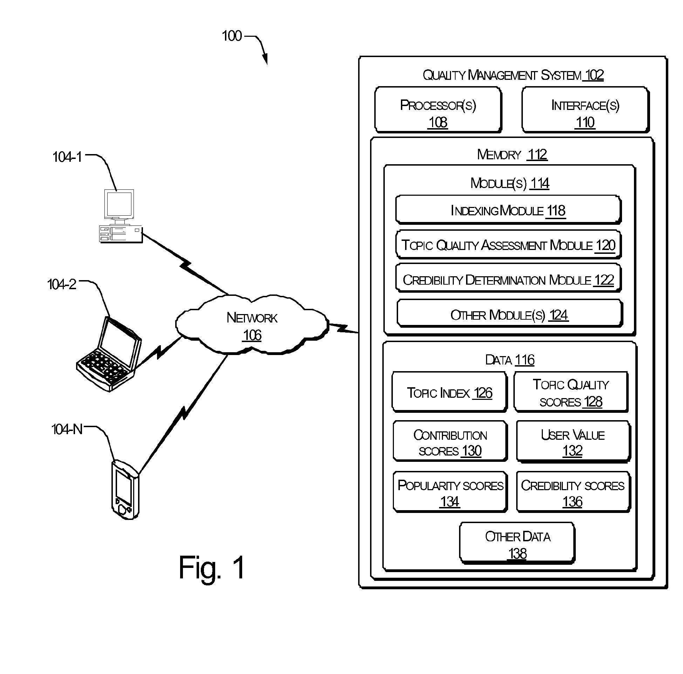

Fig. 1 illustrates a network environment 100 implementing a quality management system 102, in accordance with an embodiment of the present subject matter. In one implementation, the network environment 100 can be a public network environment, including a large number of personal computers, laptops, various servers, such as blade servers, and other computing devices. In another implementation, the network environment 100 can be a private network environment with a limited number of personal computers, servers, laptops and other computing devices.

The quality management system 102, hereinafter referred to as system 102 is communicatively connected to a plurality of user devices 104-1, 104-2,...104-N, through a network 106. Such user devices 104-1, 104-2,...104-N are collectively referred to as the user devices 104 and individually referred to as a user device 104. The system 102 and the user devices 104 may be implemented as any of a variety of conventional computing devices, including, servers, a desktop personal computer, a notebook or portable computer, a workstation, a mainframe computer, a mobile computing device, and a laptop. Further, in one implementation, the system 102 may be a distributed or centralized network system in which different computing devices may host one or more of the hardware or software components of the system 102. In another implementation, the various components of the system 102 may be implemented as a part of the same computing device.

The network 106 may be a wireless network, a wired network, or a combination thereof. The network 106 can also be an individual network or a collection of many such individual networks, interconnected with each other and functioning as a single large network, e.g., the Internet or an intranet. The network 106 can be implemented as one of the different types of networks, such as intranet, local area network (LAN), wide area network (WAN), the internet, and the like. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network 106 may include network devices, such as network switches, hubs, and routers for providing a link between the system 102 and the user devices 104. The network devices within the network 106 may interact with the system 102 and the user devices 104 through the communication links.

In one implementation, the system 102 receives content from various users associated with a social platform. Generally, the users, who are registered and have their corresponding personal profiles in the social platform, may share their experiences, information, knowledge, opinion or reviews on various topics, etc., by contributing content in the social platforms. The content contributed by a user to the social platform may be hereinafter referred to as user contributed content. The user contributed content may be in the form of text, image, video, votes, likes/dislikes, rating, web links, and the like depending upon the type of social platform. For example, discussion forums may allow the users to contribute the content in the form of text and image. The social networking websites, such as Facebook™, allow users to contribute the content in the form of text, image, video, votes, web links, likes/dislikes, and the like.

Upon receiving the user contributed content, the system 102 may process the user contributed content to enhance the content quality and user engagement in the social platform. For this purpose, the system 102 includes one or more processor(s) 108, interface(s) 110, and a memory 112 coupled to the processor(s) 108. The processor(s) 108 may be implemented as one or more microprocessors, microcomputers, microcontrollers, digital signal processors, central processing units, state machines, logic circuitries, and/or any devices that manipulate signals based on operational instructions. Among other capabilities, the processor(s) 108 are configured to fetch and execute computer-readable instructions and data stored in the memory 112.

The interface(s) 110 may include a variety of software and hardware interfaces, for example, interface for peripheral device(s) such as a keyboard, a mouse, an external memory, a printer, etc. Further, the interface(s) 110 may enable the system 102 to communicate over the network 106, and may include one or more ports for connecting the system 102 with other computing devices, such as web servers and external databases. The interface(s) 110 may facilitate multiple communications within a wide variety of protocols and networks, such as a network, including wired networks, e.g., LAN, cable, etc., and wireless networks, e.g., WLAN, cellular, satellite, etc.

The memory 112 may include any computer-readable medium known in the art including, for example, volatile memory such as static random access memory (SRAM) and dynamic random access memory (DRAM), and/or non-volatile memory, such as read only memory (ROM), erasable programmable ROM, flash memories, hard disks, optical disks, and magnetic tapes. The memory 112 also includes modules 114 and data 116.

The modules 114 include routines, programs, objects, components, data structures, etc., which perform particular tasks or implement particular abstract data types. The program modules 114 further include an indexing module 118, a topic quality assessment module 120, a credibility determination module 122, and other modules 124. The other modules 124 may include programs or coded instructions that supplement applications and functions on the system 102, for example, programs in the operating system.

The data 116, amongst other things, serves as a repository for storing data processed, received, and generated by one or more of the modules 114. The data 116 includes a topic index 126, topic quality scores 128, contribution scores 130, user value 132, popularity scores 134, credibility scores 136, and other data 138. The other data 138 may include data generated as a result of the execution of one or more modules in the modules 114.

The system 102, in accordance with an embodiment of the present subject matter, classifies the user contributed content into various topics, assess the quality of such topics, and evaluate the credibility of the users who can be targeted for enhancing the content quality and user engagement in the social platform. The entire process of enhancing the content quality and the user engagement in the social platform is explained in detail under the following sections, viz., content classification, topic quality assessment, and credibility determination.

Content Classification

In one implementation, the system 102 includes the topic index 126, which may be created by a system administrator and stored within the system 102 for classifying the content contributed by various users in the social platform into a plurality of topics. The plurality of topics includes, but is not restricted to, sports, politics, science, technology, astrology, and news. In one implementation, such topics may include subtopics, such as cricket, hockey, Congress, Bhartiya Janta Party (BJP), and further subtopics, which may be event specific topics, for example, India Vs Pakistan cricket match held on XYZ date, Prime Minister's visit to Nepal, and plane crash in Mangalore. Thus, the topic index 126 may include a hierarchy of topics including various topics ranging from more generic topics to more specific subtopics. For the purpose of clarity, the topics and the subtopics are collectively referred to as t topics, and individually referred to as topic. The topic index 126 can be periodically updated when new topics are identified or existing topics are required to be modified.

In operation, the indexing module 118 within the system 102 receives the user contributed content from the user and indexes the content into appropriate topic(s) in the topic index 126. For example, the user contributed content related to sports can be indexed to sports topic, user contributed content related to politics can be indexed to politics topic, and the like. In one implementation, the indexing module 118 indexes the user contributed content based on indexing rules. The indexing rules may use, for example, text mining techniques, known in the art. Based on the indexing rules, the indexing module 118 analyzes the user contributed content to identify one or more keywords based on which the user contributed content is tagged to appropriate topic(s). If no appropriate topic(s) is found in the topic index 126, the indexing module 118 may suggest the system administrator to create a new topic in the topic index 126.

Topic Quality Assessment

Subsequent to classification of the user contributed content into appropriate topic(s) in the topic index 126, quality of the content, also referred to as topic quality, in each topic in the topic index 126 is assessed based on various topic quality assessment parameters. In one implementation, the topic quality assessment module 120 assesses the topic quality, i.e., the quality of the content posted under various topics, based at least on the topic quality assessment parameters. The topic quality assessment parameters may include, but are not restricted to, type of content, sentiments of content (positive or negative), votes, ratings of the topic, likes or dislikes, reviews or feedbacks, and spam or junk posted in the topic by various users. The type of content includes parameters, such as creations and interactions. The parameters of creations and interactions indicate whether the user has created the content or posted the content as an interaction or thread to the content created by other users. The sentiments of the content may be indicated in the form of positive or negative sentiments indicating whether the creations or interactions are positive or negative. These sentiments may be determined by performing a sentiment analysis on the content using sentiment analysis techniques, known in the art. As a result of the assessment, topic quality scores are generated for the topics.

In an implementation, a threshold topic quality score may be assigned to the topics in the topic index 126. If the topic quality score for a given topic is found to be lower than the threshold topic quality score, the topic quality is considered as bad or poor. Whereas, the topic quality is considered as good, when the topic quality score is above the threshold topic quality score.

In one implementation, the topic quality assessment module 120 may generate the topic quality scores at predetermined intervals. In another implementation, the topic quality assessment module 120 may generate the topic quality scores when a request for accessing the topic quality is received from the system administrator. In yet another implementation, the topic quality assessment module 120 may generate the topic quality scores when new content is indexed to the topic. The topic quality scores corresponding to each topic may be stored as topic quality scores 128 within the system 102.

In one implementation, the topic quality assessment module 120 computes the topic quality score (Q) using the following equations (1), (2), (3), and (4):

$$C(\alpha) = f(P_{creator}) \qquad\qquad \dots\dots (1)$$

where $C(\alpha)$ is initial quality of the content contributed by a user and is a function of the popularity of the user in the topic(s). In one implementation, the topic quality assessment module 120 computes $C(\alpha)$. It is likely that the content posted by a popular user is read by more users and more number of users will post further content in continuation to the content posted by the popular user. For example, more number of users may provide their view using like or dislike indicators, post their comments or review on the comment, share the content further with their friends or followers, etc. Thus, if posted by a popular user, then the content will have high initial quality. In said implementation, $P_{creator}$, which represents popularity of the user, is computed using the equation (6) mentioned below in the description.

Once the initial quality of the content is computed, the topic quality assessment module 120 computes the current quality of the content using following equation:

$$C = C(\alpha) + \sum I_{content} \qquad \ldots\ldots.. (2)$$

where C is the current quality of the content and $\sum I_{content}$, denotes content quality that is assessed based on interactions regarding the content under consideration. The content quality may be computed based on the topic quality assessment parameters described above. The topic quality assessment module 120 assesses the content quality using a weighing technique. The weighing technique involves defining weightage for each of the topic quality assessment parameters, and assigning a value to the content based on the corresponding weightage and the corresponding topic quality assessment parameter.

For example, a weightage 2 may be assigned to the parameter 'type of content', i.e., if the type of content indicates that the content is in a creation, a value 2 may be assigned to the content with respect to the parameter 'type of content'. On the other hand, if the type of content indicates that the content is in an interaction, a value 1 may be assigned to the content. Further, a weightage 1 may be assigned to each like and -1 for each dislike. Hence, if there is 1 like and 10 dislikes associated with the content, a value -9 may be assigned to the content, thereby indicating that the content is generally disliked by the users. Furthermore, a weightage 5 may be assigned to 'sentiments', and so if the sentiment analysis indicates that nature of the content is negative, a value -5 may be assigned to the content. On the other hand, if nature of the content is positive, a value 5 may be assigned to the content. Further, based on the degree of negativity or positivity, a value in between -5 to 5 may be assigned to the content. For example, if the nature of the content is slightly, say 20%, negative, value -1 may be assigned to the content. Thus, the content quality may have a positive or a negative value, thereby ensuring that content, which is posted by the users who may be popular, does not get a higher value even when they post junk content.

In said implementation, a summation of the values represents the quality of the content $\sum I_{content}$. The $\sum I_{conten}$ thus computed is added to the $C(\alpha)$ to obtain C, current quality of the content.

Once current quality of the content (C) is computed, a summation of the current quality of content with respect to each content represents overall quality of the content (V) associated with the topic, as represented by the following equation (3):

$$V = \sum_{i \subset Topic} C_i \qquad \ldots\ldots.. (3)$$

where index 'i' represents number of content posted for a topic, which can also be referred as number of posts.

The obtained overall quality of the content (V) associated with the topic can be normalized using the equation (4) to obtain topic quality (Q).

$$Q = \sum_{i=1}^{n} \frac{C_i}{C_i(\alpha)} \qquad \ldots\ldots.. (4)$$

According to the above equation, the current quality of the content $C$ is divided by the initial quality of the content $C(\alpha)$, to normalize the overall quality of the content. By doing so, the topic quality (Q) is obtained, which is independent of the number of contents or posts. Thus, a topic having a large number of contents but not of much quality may not have a high topic quality as compared to a topic having fewer posts but of good quality.

Credibility Determination

In one implementation, based on the topic quality scores, topics with low quality scores or poor quality topics can be identified. Such topics may be then considered for further processing or improvement. Generally, some users may be good at contributing content related to certain topics based on their knowledge and expertise. For example, a user 'A' may be good at contributing content related to sports, and another user 'B' may be good at contributing content related to politics, and yet another user 'C' may be good at contributing content related to sports and astrology. Thus, credibility of the users in contributing content related to the topics under consideration can be determined. In one implementation, the credibility scores for the users is computed based at least on quality of the content contributed by the user related to the topics. Based on the credibility scores, credibility of the users can be determined. For example, the users with high credibility scores in a topic are considered as credible users with respect to that topic.

The credibility determination module 122 within the system 102, computes the credibility scores for each of the plurality of users, and may store such credibility scores as credibility scores 136 within the system 102. In one implementation, the credibility determination module 122 computes the topic selective credibility scores for the users. In another implementation, the credibility determination module 122 computes global credibility scores for the users. The topic selective credibility scores may be understood as contribution scores for the users, when computed with respect to selected topic(s), for example, a single topic, such as, cricket or a group of topics, such as sports. The topic selective contribution scores may be useful in identifying credible users with respect to the selected topic(s). While, the global credibility scores may be understood as credibility scores for the users, when computed with respect to all the topics in the topic index 126. The global credibility scores may be useful in identifying credible users across the social platform.

In one implementation, upon identifying the credible users with respect to selected topic(s), various quality improvement or enhancement actions can be taken to enhance the quality of content in the selected topic(s). For example, the credible users can be incentivized to encourage the credible users to contribute more quality content in the topic(s), so that the quality of the topic(s) can be improved. In one implementation, even if the topic quality is good, the credible users can be identified and motivated to keep on contributing good quality content in the topic, so as to maintain the topic quality.

In another implementation, upon identifying the credible users through the social platform, various enhancement actions can be taken to enhance the user engagement across the social platform. For example, such credible users with good contribution throughout the social platform can be identified and rewarded with special offers or free of cost services to encourage more participation from the user and other users. Rewarding the users with various offers may also attract new users to join the social platform and indulge in the competitive environment of wining the rewards. For example, an incentive can be posting free advertisements on the social platform. In said example, users who are business owners or market professionals are encouraged to increase their participation in the social platform to avail such free services and promote their products and professional services. Further, it will also encourage new users, such as new business owners and market professionals to join the social platform with the intent of winning such free of cost advertisement services to promote their products and professional services.

The manner in which the credibility scores, including the topic selective credibility scores and global credibility scores is computed is explained in detail in the following paragraphs.

In one implementation, the credibility determination module 122 generates the topic selective credibility scores based at least on the quality of content contributed by the users who have contributed to the selected topic(s). Such quality of content may be determined from their corresponding user value, which is determined based on their corresponding contribution scores and the corresponding topic quality scores. The contribution score indicates the amount of content contributed by the users in the topic(s). The user value indicates value that the user contribution brings to the topic(s). In other words, the user value indicates the quality of their contribution in the topic(s).

Each individual user may have a different or similar contribution scores for each topic, depending upon the quantity of their contribution in the selected topic(s). For example, a user 'A' may have 60% contribution score in a topic 'ABC', another user 'B' may have 20% contribution score in the topic 'ABC'. In this example, the user 'A' may be considered as the user who has posted a good amount of content in the topic(s).

In another example, user value corresponding to the users 'A' and 'B' represents the value of their contribution to the topic, and may vary depending on the topic quality. For example, the user 'A' may have 60% contribution scores with respect to the topic 'ABC' having a topic quality score of 20%, which may be considered as a poor quality topic, and thus user 'A' may have a user value of 12%. While, the user 'B' may have 20% contribution scores with respect to a topic 'DEF' having a topic quality score of 90%, which may be considered as good quality topic, and thus user 'B' may have a user value of 18%. In said example, though the user 'A' has contributed more amount of content than the user 'B', the user value of the user 'A' is lesser than the user value of the user 'B", as the value of the contribution by user 'A' was good but not good enough to improve the quality of the topic.

In an implementation, credible users may be the users having user value greater than or equal to a threshold user value. The threshold user value score can be a predefined score, say, 17%, or it may be the highest user value that a user has got under the selected topics. Such credible users can be targeted to improve the quality of content in the topic(s).

In another implementation, the credibility determination module 122 generates the topic selective credibility scores based further on popularity scores of the users with respect to the selected topic(s).

The popularity score indicates popularity of the users with respect to the selected topic(s). If the users are popular, then it is likely that the content posted by the user is read by a large number of other users participating in the topic(s). Thus, the content posted by the popular user may have a huge impact on the topic quality.

In said implementation, if the users have the capability of posting a good amount of quality content in the topic(s), and if the users are popular, then such users can be considered as credible users with respect to the topic(s). The credible users can be targeted to improve the quality of content in the topic(s).

Likewise, the credibility determination module 122 computes the global credibility scores based at least on the quality of content contributed by the users related to all the topics in the topic index taken together, which can be obtained by adding the user value of the users with respect to each of the topics. In addition to the user value, the credibility determination module 122 computes the global credibility scores based on the popularity scores of the users across the social platform. The users with high global credibility scores are considered as credible users across the social platform and these users can be incentivized or rewarded to improve the user engagement in the social platform.

The manner in which contribution scores, user value, and popularity scores are computed is described below in detail. It is to be understood that each of contribution scores, user value and the popularity scores can be computed for the selected topic(s), when the topic selective credibility score is to be computed, and can be computed for all the topics, when the global credibility scores is to be computed. For the purpose of explanation, each of contribution scores, user value, and the popularity scores is explained below with reference to the selected topic(s). It will be appreciated that the same can be computed for all the topics, taken together.

The contribution score for each of the plurality of users can be computed based on amount of content contributed by the users with respect to the topic(s) under consideration.

In one implementation, the contribution score (Z) is computed by taking the summation of the number of posts or contents contributed by the user in the topic(s) under consideration. For example, if the contribution score is to be computed for two topics, namely, topic 'ABC' and topic 'DEF', then the number of posts, say 10 posts, contributed by the user in the topic 'ABC', is added to the number of posts, say, 30 posts, contributed by the user in the topic 'DEF' to obtain contribution score as 40 posts. The contribution score, say 40 posts, may also be represented in the form of percentage considering the total number of posts associated with the topic. For example, if the total number of posts associated with the topics 'ABC' and 'DEF' are 100, the contribution scores of the user may be represented as 40%. The credibility determination module 122 may store the computed contribution scores in the contribution scores 130.

The user value is computed based on the contribution score and the topic quality score corresponding to the selected topic(s). The credibility determination module 122 within the system 102 computes the user value for each user, who has contributed content in the selected topic(s). In one implementation, the credibility determination module 122 computes the user value (O) for a $j^{th}$ user, by multiplying the contribution score (Z) with the topic quality score (Q) corresponding to the selected topic(s). In an example, user value for a given user and a topic may be represented as an element $O_{ij}$ in the matrix O represented by the following equation (5).

$$O(m,n) = \sum_{i \subset m} \sum_{i \subset n} z_{ij} \times Q_i \qquad \qquad \dots\dots (5)$$

where, index 'm' represents the number of topic(s); index 'n' represents the number of users, and the *O(m, n)* represents the aggregated matrix of users contribution across the topic(s) calculated as a summation of amount of quality the users contribute to the topic(s).

In one implementation, the credibility determination module 122 computes the popularity scores for each user based on popularity evaluation parameters. The popularity evaluation parameters may include, but are not restricted to, 'friends' or 'followers' associated with the user, activities and consistency of the user in the selected topic(s), reviews or feedback about the user based on the interaction of the user with other users in the selected topic(s). In one implementation, the credibility determination module 122 computes the popularity scores (P) for each user using the following equation (6):

$$P = \alpha\,\frac{P_a}{P_A} + \beta\,\frac{P_r}{P_R} + \gamma\,\frac{P_h}{P_H} + \delta\,\frac{P_f}{P_F} \qquad\qquad \ldots\ldots (6)$$

where $P_a$ represents a parameter associated with activities of the user in the selected topic(s); $P_r$ represents a parameter associated with reach of 'friends' or 'followers', which indicates that the content posted by the user is reachable to how many number of other users, such as 'friends' and 'followers' associated with the social platform; $P_h$ represents a parameter associated with authority of the user to drive people reactions, which indicates how many other users are forwarding or circulating the content posted by the user to further users. In social platform like Twitter™, value of the authority may be high if many other users re-tweet the tweet posted by the user. In social platform like Facebook™, value corresponding to authority may be high if many other users are sharing the post created by the user in their own personal profiles or profiles of others. Further, $P_f$ represents a parameter associated with feedback associated with the user, as obtained from other users in form of reviews, rating, likes/dislikes, etc. Corresponding values may be assigned to the above mentioned parameters for each user.

Each of the parameters $P_a$, $P_r$, $P_h$, and $P_f$ may have corresponding threshold values associated therewith, which are represented as $P_A$, $P_R$, $P_H$ and $P_F$ respectively. The threshold values may be the highest value associated with the parameters. These threshold values are social platform specific values. Each social platform may define different or similar threshold values for these parameters.

Each of the values $P_a$, $P_r$, $P_h$, and $P_f$ may be divided by the corresponding values $P_A$, $P_R$, $P_H$ and $P_F$ in order to obtain normalized values. The normalized values may be added to obtain the popularity (P). Further, social platform coefficients, such as $\alpha$, $\beta$, $\gamma$, and $\delta$ may be associated with the normalized values to vary the impact of the normalized values on the popularity (P). For example, if for a social platform $P_h$, parameter for computing the popularity is to be neglected, a smaller value may be associated with the corresponding coefficient $\gamma$ in order to neglect or reduce the impact of the $P_h$, parameter on the popularity of the user. In one implementation, the credibility determination module 122 stores the popularity scores as popularity scores 134 within the system 102.

As described previously, in one implementation, the credibility scores for the users are based on the quality contribution by the users in the selected topic(s), which is determined by the user value. In said implementation, the credibility scores are same as the user value of the users.

In another implementation, the credibility scores for the users are based on the user value and the popularity score. In said implementation, the credibility score (R) for a user can be computed by adding user value (O) and the popularity score (P), represented by the following equation (7).

$$R = (O(m,n) + \mu P) \qquad\qquad \ldots\ldots (7)$$

where, coefficient '$\mu$' is constant for a given social platform. Based on the kind of social platform, to vary the impact of popularity (P) of the user on the computation of the credibility, the value of '$\mu$' may vary.

Depending on the topic selective credibility scores, one or more credible users with respect to topic(s) can be identified and incentivized, in order to motivate the user to post more quality content in the topic. The quality of the content in each and every topic in the social platform can be taken into consideration and quality enhancement actions can be taken to improve or maintain the quality of content in each topic, thereby raising the overall quality of content in the social platform. Further, depending on the global credibility scores, one or more credible users across the social platform can be identified and incentivized to improve the user engagement in the social platform.

In one implementation, the credibility scores may be displayed to the users on their corresponding personal profiles. Alternatively, users may send requests for viewing the credibility scores from their personal profiles. In another implementation, a 'What if analysis' feature can be provided on the website of the social platform, where users can enter content and view the impact of the content on the credibility scores.

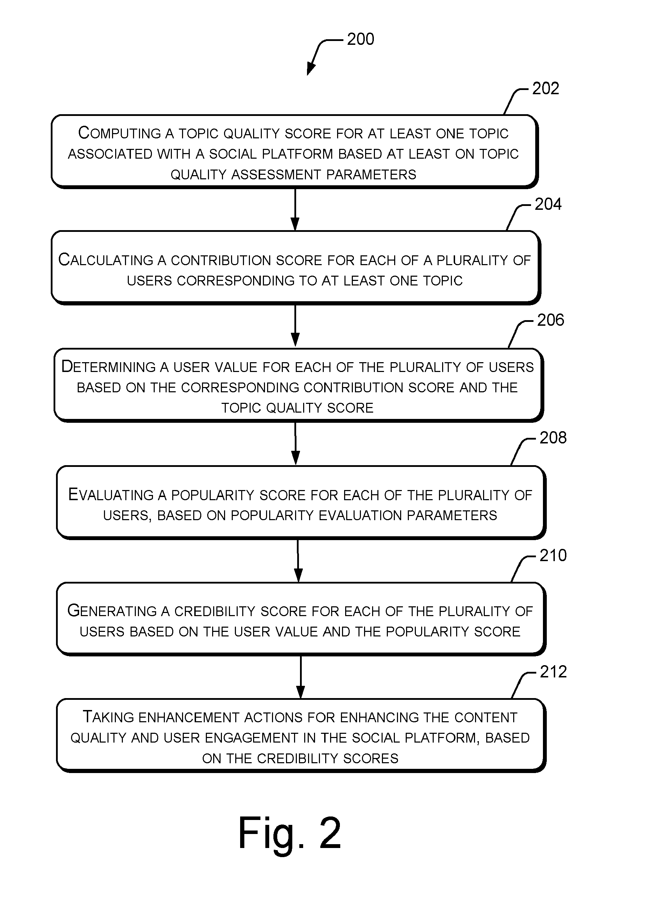

Fig. 2 illustrates a method 200 for method for enhancing content quality in a social platform, in accordance with an embodiment of the present subject matter. The method may be described in the general context of computer executable instructions. The method may also be practiced in a distributed computing environment where functions are performed by remote processing devices that are linked through a communications network. In a distributed computing environment, computer executable instructions may be located in both local and remote computer storage media, including memory storage devices.

The order in which the method is described is not intended to be construed as a limitation, and any number of the described method blocks can be combined in any order to implement the method, or alternative methods. Additionally, individual blocks may be deleted from the method without departing from the spirit and scope of the subject matter described herein. Furthermore, the method can be implemented in any suitable hardware, software, firmware, or combination thereof.

At block 202, a topic quality score for at least one topic in a social platform is computed based on topic quality assessment parameters. In one implementation, at least one topic may be selected from the topic index 126.

In one implementation, the topic quality assessment module 120 assesses the quality of the content associated with the at least one topic based at least on a variety of topic quality assessment parameters. Few examples of the topic quality assessment parameters include, but not restricted to, number of votes on the at least one topic, rating of the at least one topic, number of likes on the at least one topic, number of dislikes on the at least one topic, sentiments of the user contributed contents, number of spams posted in the topic by the plurality of users, and type of content.

The sentiment of the content/interactions indicates whether the content/interaction is positive or negative. Such a sentiment is identified by performing sentiment analysis on the content/interactions using natural language processing (NLP) techniques, known in the art. The likes/dislikes, reviews and testimonials may indicate the feedback of various users. The topic quality assessment module 120 computes the topic quality score for the topic based at least on the assessment. In one implementation, the topic quality assessment module 120 computes the topic quality score based on weightage defined for various topic quality assessment parameters. Based on the weightage, the user contributed content may be assigned values. A weighted mean or average of these values is generated as the topic quality score.

The topic quality assessment module 120 may compute the topic quality score for certain selected topics or all the topics. For example, multiple topics that are related to one another or fall under the same domain can be selected together for assessment. The topic quality assessment module 120 may store the computed topic quality score as topic quality scores 128.

At block 204, a contribution score for each of a plurality of users is computed based on the amount of content contributed by the user to the topic. In one implementation, the amount of content contributed by the user is determined based on the number of post(s) created by the user. In one implementation, the credibility determination module 122 computes the contribution score for each user, the computed contribution scores may be stored as contribution scores 130. The contribution score is indicative of quantity of the contribution by the user to the topic(s). The users contributing large amount of content in the topic are given high contribution scores.

At block 206, a user value is determined for each of the plurality of users based on the contribution score and the topic quality score. The user value indicates the quality of the contribution with respect to the content posted by the user in the topic(s) under processing. In one implementation, the credibility determination module 122 computes the user value, and stores the user value as the user value 132. The users creating large amounts of content in the topic (s) may have higher contribution score, but the value their contribution brings to the topic(s) depends on the topic quality. For example, the users who contributed a large amount of content in a topic having a low topic quality score may be given a less topic selective user value; while the users who contributed a small amount of content in a topic having a high topic quality score may be given a high topic selective user value

At block 208, a popularity score for each of the plurality of users is evaluated based on the popularity evaluation parameters. In one implementation, the credibility determination module 122 evaluates the popularity score based on popularity evaluation parameters. The popularity evaluation parameters may include, but are not restricted to, reach of the content to 'friends' or'followers', authority of the user with respect to topic(s), activities and consistency of the user in the topic(s), reviews or feedback obtained from other users posted in the form of testimonials, rating, etc.

At block 210, a credibility score for each of the plurality of users is generated based on the corresponding user value and the corresponding popularity score. In one implementation, when the credibility score is computed for selected topic(s), the credibility score may be referred to as topic selective credibility score. The topic selective credibility score indicates, for example, credibility of the users with respect to the selected topic(s). In another implementation, when credibility score is computed for all the topics in the social platform, such a credibility score is referred to as global credibility score. The global credibility score indicates, for example, credibility of the users across the social platform. In one implementation, the credibility determination module 122 generates the credibility score based on the corresponding user value and the corresponding popularity score.

At block 212, enhancement actions may be taken based on the credibility score of each of the plurality of users, for enhancing the content quality and user engagement in the social platform, thereby enhancing the popularity and profitability of the social platform. In one implementation, if the computed topic quality score of the topic is low, i.e., the quality of the topic is poor, the users with high topic selective credibility score, hereinafter referred to as credible users, may be motivated to improve the quality of the topic. For example, the credible users may be incentivized or rewarded to encourage them to contribute large amount of quality content in the topic, thereby enhancing the quality of the topic, and thus the quality of the social platform.

In one implementation, if the quality score of the topic is high, i.e., the quality of the topic is good, one or more of the credible users, for example, the users having highest credibility score may be rewarded for the quality contribution in the topic, in order to motivate the user to continue posting quality content in the topic, for maintaining good quality of the topic.

In another implementation, users with high global credibility scores may be offered to post free advertisements on the social platform, thereby increasing the participation by the users, who would like to promote their products, services, etc. It will also encourage new users to join the social platform and participates in various activities of the social platform for availing such free of cost advertisement services to promote their products and services. Further, the enhancement actions may include displaying the name and picture of the users with high global credibility scores on the home page of the website of the social platform.

Although implementations for methods and systems for enhancing content quality and user engagement in social platforms have been described in language specific to structural features and/or methods, it is to be understood that the appended claims are not necessarily limited to the specific features or methods described. Rather, the specific features and methods are disclosed as exemplary implementations for enhancing content quality and user engagement in social platforms.

**Claims**

1. A method comprising:

    indexing a plurality of user contributed contents, received from a plurality of users, to at least one topic associated with a web based social platform, wherein the indexing is based on indexing rules;
    computing, by a quality management system, a topic quality score for the at least one topic based on assessment of a quality of each of the plurality of user contributed contents, wherein the assessment is based at least on topic quality assessment parameters;
    generating, by a quality management system, a credibility score for each of a plurality of users based in part on the topic quality score, wherein the plurality of users include users who contributed the user contributed contents; and
    identifying, by a quality management system, at least one credible user from the plurality of users based on the credibility score to enhance at least one of quality of the web based social platform, and user engagement in the web based social platform.

2. The method as claimed in claim 1, wherein the generating comprises evaluating a user value for each of the plurality of users based on a corresponding contribution score and the topic quality score, wherein the user value indicates an amount of quality contribution by each of the plurality of users to the at least one topic.

3. The method as claimed in claim 2, wherein the generating further comprises:

    determining a popularity score for each of the plurality of users based on popularity evaluation parameters; and
    computing the credibility score for each of the plurality of users based on the corresponding user value and the popularity score.

4. The method as claimed in claim 1, wherein the computing comprises:

    assigning a value for each of the plurality of user contributed contents with respect to each of the topic quality assessment parameters, based on a weight associated with the each of the topic quality parameters; and
    calculating a weighted mean of the values corresponding to each of the topic quality assessment parameters to determine the quality of the each of the plurality of user contributed contents.

5. The method as claimed in claim 1, wherein the computing comprises determining an initial quality of each of the plurality of user contributed contents based on a popularity score of the corresponding users.

6. The method as claimed in claim 1, wherein the topic quality assessment parameters include number of votes on the at least one topic, rating of the at least one topic, number of likes on the at least one topic, number of dislikes on the at least one topic, sentiments of the user contributed contents, number of spams posted in the topic by the plurality of users.

7. A quality management system (102) comprising:

    a processor (108); and

a memory (112) coupled to the processor (108), the memory (112) comprising:

a topic quality assessment module (120) configured to compute a topic quality score for at least one topic associated with a web based social platform based at least on topic quality assessment parameters; and
a credibility determination module (122) configured to generate a credibility score for each of a plurality of users associated with the web based social platform based in part on the topic quality score.

8. The quality management system (102) as claimed in claim 7, further comprising an indexing module (118) configured to index a plurality of user contributed contents, received from the plurality of users, to a corresponding topic associated with the web based social platform, based on indexing rules.

9. The quality management system (102) as claimed in claim 7, wherein the topic quality assessment module (120) computes the topic quality score based on weights associated with each of the plurality of topic assessment parameters.

10. The quality management system (102) as claimed in claim 7, wherein the credibility determination module (122) is configured to generate the credibility score, for each of the plurality of users, based on a corresponding contribution score and the topic quality score.

11. The quality management system (102) as claimed in claim 10, wherein the credibility determination module (122) is configured to generate the credibility score, for each of the plurality of users, further based on a corresponding popularity score.

12. The quality management system (102) as claimed in claim 7, wherein the credibility determination module (122) is configured to generate the credibility scores when the topic quality score corresponding to the at least one topic is below a threshold topic quality score.

13. The quality management system (102) as claimed in claim 7, wherein the topic quality assessment parameters include number of votes on the at least one topic, rating of the at least one topic, number of likes on the at least one topic, number of dislikes on the at least one topic, sentiments of the user contributed contents, number of spams posted in the at least one topic by the plurality of users.

14. A computer-readable medium having embodied thereon a computer program for executing a method comprising:

assessing a quality of each of a plurality of user contributed contents related to at least one topic associated with a web based social platform based at least on topic quality assessment parameters;
generating a topic quality score for the at least one topic based on the assessing; and
evaluating a credibility score for each of a plurality of users based in part on the topic quality score, wherein the plurality of users include users who contributed the user contributed contents, and further wherein the credibility score corresponding to a user is indicative of an amount of quality contribution by the user to the at least one topic.

100

QUALITY MANAGEMENT SYSTEM 102

| PROCESSOR(S) 108 | INTERFACE(S) 110 |

MEMORY 112

MODULE(S) 114

INDEXING MODULE 118

TOPIC QUALITY ASSESSMENT MODULE 120

CREDIBILITY DETERMINATION MODULE 122

OTHER MODULE(S) 124

DATA 116

| TOPIC INDEX 126 | TOPIC QUALITY SCORES 128 |
| CONTRIBUTION SCORES 130 | USER VALUE 132 |
| POPULARITY SCORES 134 | CREDIBILITY SCORES 136 |

OTHER DATA 138

104-1

104-2

104-N

NETWORK 106

## Fig. 1

┌─ 200

┌─ 202

COMPUTING A TOPIC QUALITY SCORE FOR AT LEAST ONE TOPIC
ASSOCIATED WITH A SOCIAL PLATFORM BASED AT LEAST ON TOPIC
QUALITY ASSESSMENT PARAMETERS

┌─ 204

CALCULATING A CONTRIBUTION SCORE FOR EACH OF A PLURALITY OF
USERS CORRESPONDING TO AT LEAST ONE TOPIC

┌─ 206

DETERMINING A USER VALUE FOR EACH OF THE PLURALITY OF USERS
BASED ON THE CORRESPONDING CONTRIBUTION SCORE AND THE
TOPIC QUALITY SCORE

┌─ 208

EVALUATING A POPULARITY SCORE FOR EACH OF THE PLURALITY OF
USERS, BASED ON POPULARITY EVALUATION PARAMETERS

┌─ 210

GENERATING A CREDIBILITY SCORE FOR EACH OF THE PLURALITY OF
USERS BASED ON THE USER VALUE AND THE POPULARITY SCORE

┌─ 212

TAKING ENHANCEMENT ACTIONS FOR ENHANCING THE CONTENT
QUALITY AND USER ENGAGEMENT IN THE SOCIAL PLATFORM, BASED
ON THE CREDIBILITY SCORES

# Fig. 2

Europäisches
Patentamt

European
Patent Office

Office européen
des brevets

## EUROPEAN SEARCH REPORT

Application Number

EP 12 18 5142

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * The claimed subject-matter, with due regard to the description and drawings in accordance with Article 92 EPC, relates to processes comprised in the list of subject-matter and activities excluded from patentability under Article 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. * ----- | 1-14 | INV. G06Q30/02 |
|  |  |  | TECHNICAL FIELDS SEARCHED (IPC) |
|  |  |  | G06Q |

The present search report has been drawn up for all claims

| Place of search | Date of completion of the search | Examiner |
|---|---|---|
| The Hague | 17 January 2013 | Bohner, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)